(19) Europäisches Patentamt
European Patent Office
Office européen des brevets

(11) Veröffentlichungsnummer : **0 182 344**
**B1**

(12) # EUROPÄISCHE PATENTSCHRIFT

(45) Veröffentlichungstag der Patentschrift : **25.05.88**

(51) Int. Cl.$^4$ : **C 04 B 41/52**, C 04 B 41/66

(21) Anmeldenummer : **85114659.7**

(22) Anmeldetag : **18.11.85**

(54) **Verfahren zum Abdichten von Beton und Natursteinen.**

(30) Priorität : **20.11.84 DE 3442368**

(43) Veröffentlichungstag der Anmeldung : **28.05.86 Patentblatt 86/22**

(45) Bekanntmachung des Hinweises auf die Patenterteilung : **25.05.88 Patentblatt 88/21**

(84) Benannte Vertragsstaaten : **AT CH DE GB IT LI LU NL**

(56) Entgegenhaltungen :
**DE-C- 175 400**
**US-A- 4 258 090**

(73) Patentinhaber : **Knappwost, Adolf, Prof. Dr.**
**Am Pfarrgarten 3**
**D-3220 Alfeld (DE)**

(72) Erfinder : **Knappwost, Adolf, Prof. Dr.**
**Am Pfarrgarten 3**
**D-3220 Alfeld (DE)**

(74) Vertreter : **Patentanwälte TER MEER - MÜLLER - STEINMEISTER**
**Mauerkircherstrasse 45**
**D-8000 München 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 182 344 B1

Jouve, 18, rue St-Denis, 75001 Paris, France

**Beschreibung**

Gegenstand der Erfindung ist ein Verfahren zum Abdichten von Beton, insbesondere Stahlbeton oder Natursteinen, wie Sandstein gegen Angriffe durch saure Medien, wie $CO_2$, $SO_2$, $SO_3$, $NO_2$ und die daraus gebildeten Säuren, durch Behandeln der Steinoberfläche mit einer wäßrigen Fluorosilicatlösung.

Es ist bekannt, daß die in Beton und Natursteinen vorliegenden, an sich wasserunlöslichen Verbindungen mit verschiedenen Flüssigkeiten und Gasen chemisch reagieren können, wobei die Festigkeit des Materials vermindert wird und im äußersten Fall der Zusammenhalt vollständig aufgehoben werden kann. So wird unter der Einwirkung von Säuren und gelösten Salzen mit austauschfähigen Kationen das Material von der Oberfläche her aufgelöst, da die Reaktionsprodukte wasserlöslich sind und durch den Regen ausgewaschen werden. Dies gilt insbesondere für den Gips, der sich aus den in dem Material vorhandenen Calciumverbindungen unter der Einwirkung von Schwefelsäure bildet.

Auch Gase können in den Beton oder die Natursteine eindringen und in Gegenwart von Feuchtigkeit mit den Bestandteilen dieses Materials reagieren. So werden Schwefelwasserstoff und Schwefeldioxid zu Schwefelsäure oxidiert, welche die vorhandenen Calciumverbindungen partiell in Gips (Calciumsulfat) umwandelt. Kohlendioxid reagiert in erster Linie mit dem im Beton vorhandenen Calciumhydroxid unter Bildung von Calciumcarbonat. Hierbei wird die Festigkeit des Materials im allgemeinen zwar nicht erniedrigt sondern erhöht.

Dieser Vorgang, der auch als Carbonatisierung bezeichnet wird, führt jedoch zu einer Erniedrigung der Alkalität des Materials, was im Fall von Beton von erheblicher Bedeutung ist. Normalerweise entspricht die Alkalität des Betons einem pH-Wert von etwa 12,5, was sich durch Calciumhydroxid ($Ca(OH)_2$) ergibt, welches als Hydrolyseprodukt der Calciumsilicathydrate und Calciumhydrataluminate im Beton vorliegt. Diese Alkalität ist die Voraussetzung für das Nichtrosten der Stahlarmierung des Stahlbetons. Durch diese hohe Alkalität wird die Stahloberfläche der Stahlarmierung passiviert, indem nur ein verschwindender Anteil von gelösten Eisenionen vorliegt, deren Zweiwertigkeit und Dreiwertigkeit erst den fortschreitenden Prozeß des Rostens ermöglicht.

Durch die oben angesprochene Carbonatisierung wird das in dem Beton vorhandene Calciumhydroxid durch das Kohlendioxid der Luft in Calciumcarbonat — und in vielen Fällen teilweise durch den $SO_3$-Gehalt der Luft, besonders in Städten, in Calciumsulfat umgewandelt, wodurch der pH-Wert des Betons auf Werte von etwa 8 und darunter absinkt, was zur Folge hat, daß der unerwünschte Rostprozeß der Stahlarmierung des Stahlbetons beschleunigt abläuft.

Es ist nun bekannt, daß man diesen Prozeß der Umwandlung des Calciumhydroxids in Calciumcarbonat bzw. des Calciumcarbonats in Calciumsulfat durch solche Bautenschutzstoffe verzögern kann, die den Diffusionsquerschnitt der durch die Steinoberfläche eindiffundierenden sauren Medien, wie $CO_2$, $SO_2$, $SO_3$ etc. als Gas oder als Lösung durch Abdichten der Steinoberfläche verkleinern. Dabei erscheinen solche Abdichtungsmittel besonders wirksam, die nicht nur die Poren des Betons oder des Natursteins oberflächlich verstopfen, sondern auch etwas tiefer in das Material eindringen und die deshalb das die Diffusionsgeschwindigkeit bestimmende Konzentrationsgefälle der sauren Medien vermindern. Dabei soll aber die « Atmungsfähigkeit » des Materials, also der Gas- und Flüssigkeitsaustausch mit der Umgebung nicht ganz unterbunden werden.

Es ist bereits bekannt, daß man eine erhebliche Abdichtung des Betons unter Erhalt der Atmungsfähigkeit durch das sogenannte Fluatieren erreichen kann, das heißt durch die oberflächliche Behandlung des Betons mit wäßrigen Lösungen von Fluorosilicaten, wie jenen des Magnesiums, Zinks, Aluminiums oder Bleis. Diese Lösungen reagieren mit dem Calciumhydroxid des Betons unter Bildung von schwerlöslichem Calciumfluorid ($CaF_2$) und Kieselgel gemäß beispielsweise der folgenden Gleichung

$$3Ca(OH)_2 + MgSiF_6 \rightleftharpoons 3CaF_2 + Mg(OH)_2 + Si(OH)_4.$$

Die anfallenden wasserunlöslichen Reaktionsprodukte $CaF_2$ und Kieselgel verstopfen die Poren des Betons und schützen ihn auf diese Weise gegen Witterungseinflüsse, saure Medien etc. Allerdings wird auch dem abdichtenden Agens der Weg versperrt, so daß der Grad der Oberflächenabdichtung zwar hoch ist, die Tiefe der Abdichtung aber nur sehr gering ist und sich lediglich etwa 0,1 bis 1 mm in den Beton hinein erstreckt. Dies hat zur Folge, daß das Konzentrationsgefälle für das eindiffundierende saure Medium groß bleibt.

Einem Fluatieren mit Kieselflußsäure kann eine Behandlung mit Kalkmilch bzw. Kalkwasser vorausgehen (DE-C-175 400).

Ein weiterer großer Nachteil des Fluatierens besteht darin, daß gemäß der oben angegebenen Reaktionsgleichung die Alkalität bzw. die alkalische Kapazität des Betons weiter herabgesetzt wird. Zudem reagieren die eingesetzten wäßrigen Fluorosilicatlösungen sauer, indem beispielsweise eine 10 %-ige Lösung von $MgSiF_6 \cdot 6H_2O$ einen pH-Wert von etwa 3 aufweist.

Die Aufgabe der vorliegenden Erfindung besteht nun darin, ein Verfahren anzugeben, mit dem es möglich wird, das Verfahren der eingangs angegebenen Gattung derart zu verbessern, daß die angesprochenen Nachteile der Fluatierung überwunden werden und eine einfache, schnelle und vor allem porentiefe Abdichtung des Betons

oder der Natursteine erreicht werden kann und gleichzeitig die erforderliche Passivierung der Stahlarmierung von bevorzugt behandeltem Stahlbeton nicht beeinträchtigt wird.

Diese Aufgabe wird nun gelöst durch die kennzeichnenden Merkmale des Verfahrens gemäß Hauptanspruch. Die Unteransprüche betreffen besonders bevorzugte Ausführungsformen dieser erfindungsgemäßen Lehre.

Gegenstand der Erfindung ist daher ein Verfahren zum Abdichten von Beton und Natursteinen gegen Angriffe durch saure Medien, wie $CO_2$, $SO_2$, $SO_3$ und die daraus gebildeten wäßrigen sauren Lösungen, durch Behandeln der Steinoberfläche mit einer wäßrigen Fluorosilicatlösung, welches dadurch gekennzeichnet ist, daß die mit der Fluorosilicatlösung getränkte Steinoberfläche mit einer alkalischen Lösung oder Suspension einer Calciumverbindung behandelt wird.

Bevorzugte Vertreter der erfindungsgemäß behandelten Materialien sind als Naturstein Sandstein und als Kunststein Beton und insbesondere Stahlbeton.

Bei dem erfindungsgemäßen Verfahren verwendet man vorzugsweise eine wäßrige Fluorosilicatlösung von ein- bis dreiwertigen Metallen, wie Natrium, Calcium, Magnesium, Aluminium, Zink oder Blei, des Ammoniums oder des substituierten Ammoniums, beispielsweise Alkylammonium, wobei die Alkylgruppe 1 bis 4 Kohlenstoffatome aufweisen kann, die neben der Fluorosilicatverbindung mindestens ein die Grenzflächenspannung der Lösung herabsetzendes Mittel enthalt. Mit besonderem Vorteil verwendet man das üblicherweise beim Fluatieren eingesetzte Magnesiumfluorosilicat $MgSiF_6 \cdot 6H_2O$.

Es hat sich weiterhin gezeigt, daß man den insbesondere bei Stahlbeton auftretenden Nachteil der Beanspruchung der alkalischen Kapazität des Betons durch die Fluatierung und die zu geringe Eindringtiefe der Fluorosilicatlösungen dadurch beheben kann, daß man erfindungsgemäß die Oberfläche des Materials vor oder während der Behandlung mit der Fluorosilicatlösung der Einwirkung einer verdünnten Säure aussetzt. Als verdünnte Säure kann man dabei Schwefelsäure und/oder Phosphorsäure verwenden, wobei die angewandte verdünnte Säurelösung einen pH-Wert von $\leq 2$ aufweisen sollte und gegebenenfalls ein die Grenzflächenspannung herabsetzendes Mittel enthalten kann. Eine besonders bevorzugte Arbeitsweise der vorliegenden Erfindung besteht darin, die Steinoberfläche und insbesondere die Betonoberfläche mit einer wäßrigen Fluorosilicatlösung zu behandeln, die mit einer Säure der beispielsweise oben angegebenen Art auf einen pH-Wert von $\leq 2$ eingestellt worden ist.

Durch diese bevorzugte Behandlung der Steinoberfläche und insbesondere der Betonoberfläche mit einer verdünnten Säure wird eine Selbstsperrung der tieferen Schichten des Materials durch die Zersetzung der Fluorosilicate in der Materialoberfläche vermieden.

Anschließend erfolgt die erfindungsgemäße Behandlung der mit der Fluorosilicatlösung getränkten Steinoberfläche mit der alkalischen Lösung oder Suspension der Calciumverbindung, wozu man vorzugsweise eine Aufschlämmung von Calciumhydroxid (Kalkmilch ($Ca(OH)_2$)) verwendet. Mit Vorzug wendet man einen stöchimetrischen Überschuß der alkalischen Calciumverbindung, wie Calciumhydroxid an, so daß es möglich wird, die alkalische Kapazität des Materials zu steigern. In dieser weise gelingt es erfindungsgemäß den Porenquerschnitt des behandelten Steinmaterials um mehr als 90 % zu vermindern und die Eindringtiefe der Abdichtungsbehandlung gegenüber der einfachen Fluatierung um den Faktor 5 bis 10 zu steigern. Eine ähnliche Wirkung wird bei der erfindungsgemäßen Ausführungsform des beanspruchten Verfahrens erreicht, gemäß der die Fluorosilicatlösung mit der verwendeten Säure auf einen pH-Wert von $\leq 2$ eingestellt wird, wonach die Steinoberfläche in üblicher Weise behandelt wird. Bei der bevorzugten Anwendung des erfindungsgemäßen Verfahrens auf Beton läßt man die zunächst angewandte verdünnte Säurelösung oder die angesäuerte Fluorosilicatlösung zunächst so lange auf die carbonatisierte Betonoberfläche einwirken, bis die $CO_2$-Bläschenbildung, die durch die Zersetzung des in der Betonoberfläche vorliegenden Calciumcarbonats verursacht wird, abgeklungen ist. Anschließend erfolgt dann die Realkalisierung der Betonoberfläche durch Aufbringen der alkalischen Lösung oder Suspension der Calciumverbindung, wie der Kalkmilch, wodurch die Zersetzung der Fluorosilicatlösung gemäß der oben angegebenen Reaktionsgleichung bewirkt wird. Im Fall der Anwendung der beanspruchten Verfahrensweise auf Beton oder Natursteine muß die Behandlung mit einer verdünnten Säure in der Weise durchgeführt werden, daß ein zusätzlicher Angriff des Steinmaterials durch die Säure verhindert und dennoch das tiefere Eindringen der Fluorosilicate in die Steinoberfläche begünstigt werden.

Einer weiteren bevorzugten Ausführungsform der Erfindung gemäß schaltet man bei der Behandlung von weitgehend carbonatisiertem Steinmaterial, beispielsweise Beton, der Umsetzungsreaktion mit Fluorosilicaten und der alkalischen Lösung oder Suspension einer Calciumverbindung eine Tränkung des trockenen Steinmaterials mit einer alkalischen Lösung oder Suspension mit einem pH-Wert von $\geq 12$ vor. Mit Vorteil verwendet man für das Tränken des trockenen Steinmaterials eine wäßrige Lösung oder Suspension eines Alkalimetallhydroxids wie Natriumhydroxid oder Kaliumhydroxid, oder aber Calciumhydroxid, welche Lösung mit Vorteil mindestens ein die Grenzflächenspannung der Lösung herabsetzendes Mittel enthält. Nach dem Einziehen dieser alkalischen Lösung oder Suspension erfolgt die Abdichtung in der oben beschriebenen Weise durch Behandeln mit der Fluorosilicatlösung und anschließend mit der alkalischen Lösung oder Suspension der Calciumverbindung.

Gemäß einer weiteren bevorzugten Ausführungsform der Erfindung erreicht man ein besonders schnelles und tiefes Eindringen der OH-Ionen der alkalischen Lösung oder Suspension in das Steinmaterial beim Tränkvorgang durch die Anwendung der Ionophorese. Hierbei verwendet man Elektroden, die zur Verbesserung des elektrischen Kontakts mit der zu behandelnden Steinoberfläche bzw. mit der Rückseite des betreffenden Steinkörpers, wie beispielsweise einer Mauer aus Beton, mit einer Schaumstoffschicht versehen sind, die mit einer wäßrigen alkalischen Lösung oder Suspension getränkt ist. Diese Elektroden werden mit der getränkten Schaumstoffschicht gegen die zu behandelnde Steinoberfläche bzw. deren Rückseite gepreßt, worauf man die Ionophorese unter Anwendung einer Gleichspannung im Bereich von 1 bis 1000 V, vorzugsweise 10 bis 200 V und noch bevorzugter etwa 100 V bewirkt. Die hierbei verwendeten plattenförmigen Metallelektroden bestehen vorzugsweise aus einem inerten Material. Mit Vorteil verwendet man eine Anode aus Kupfer und Kathoden aus Stahl oder vorzugsweise rostfreiem Stahl, wobei die gegen die Rückseite der zu behandelnden Steinoberfläche gepreßte Kupferanode eine Schaumstoffschicht aufweist, die mit Kalkmilch getränkt ist, während die auf die zu behandelnde Außenseite aufgebrachte Kathode aus einer Platte aus Stahl oder rostfreiem Stahl mit einer Fläche von 0,1 bis 1,0 $m^2$, vorzugsweise 0,5 $m^2$ besteht, die ebenfalls mit einer Schaumstoffschicht bedeckt ist, die mit einer Lauge, vorzugsweise Natriumhydroxid, Kaliumhydroxid oder Calciumhydroxid getränkt ist. Diese Kathode wird mit dem Minuspol der Gleichspannungsquelle mit einer Spannung von vorzugsweise 100 V leitend verbunden, während die an der Innenseite der zu behandelnden Steinoberfläche vorgesehene Anode eine etwas geringere Fläche aufweisen kann als die Kathode und mit dem Pluspol der Spannungsquelle verbunden wird. Innerhalb von etwa 30 Minuten wandern die OH-Ionen bei dieser Ionophorese in das Steinmaterial ein und erreichen in dieser Zeit bei der Anwendung des Verfahrens auf Stahlbeton die Stahlarmierung, so daß dort die für die Passivierung notwendige Alkalität erreicht wird.

Die bei dem erfindungsgemäßen Verfahren eingesetzten wäßrigen Lösungen oder Suspensionen werden vorzugweise mit einem die Grenzflächenspannung herabsetzenden Mittel in einer Menge von 0,1 bis 10 %, vorzugsweise etwa 1 % versetzt, um das Eindringen der Lösungen in die Steinoberfläche zu begünstigen. Als Grenzflächenspannung herabsetzendes Mittel verwendet man vorzugsweise ein bei Umgebungsbedingungen flüchtiges grenzflächenaktives Mittel, wie insbesondere einen Alkohol mit 1 bis 4 Kohlenstoffatomen und/oder ein Keton mit 1 bis 6 Kohlenstoffatomen. Besonders bevorzugt ist die Anwendung von Isopropylalkohol.

Die folgenden Beispiele dienen der weiteren Erläuterung der Erfindung.

Beispiel 1

Abdichtung

Die zu behandelnde Betonoberfläche wird zunächst mit einer Lösung von 1000 g Magnesiumfluorosilicat ($MgSiF_6.6H_2O$) in 10 Liter entsalztem Wasser, der 150 g Orthophosphorsäure und 100 ml Isopropylalkohol zugefügt worden sind, mit einem Pinsel oder einer Sprühpistole getränkt. Nach dem Abklingen der $CO_2$-Entwicklung wird die Betonoberfläche mit einer Aufschlämmung von 3000 g Calciumhydroxid in 10 Liter Wasser durchdringend besprüht. Nach dem Trocknen wird das überschüssige Calciumhydroxid naß oder trocken abgebürstet.

Beispiel 2

Realkalisierung

Die möglichst trockene Betonoberfläche wird mit einer Lösung von 1000 g NaOH und 100 ml Isopropylalkohol in 10 Liter entsalztem Wasser durchdringend getränkt. Nach dem Einziehen dieser Lösung in den Beton wird nach der in Beispiel 1 beschriebenen Weise die Abdichtung der Betonoberfläche bewirkt.

Beispiel 3

Realkalisierung mittels Ionophorese

Man drückt an die Innenseite einer zu realkalisierenden Betonwand eine 0,5 $m^2$ große Metallplatte aus Kupfer als Anode, welche zur homogenen Übertragung des Stroms auf die Wand mit einer mit Kalkmilch getränkten Schaumstoffschicht bedeckt ist. Auf die gegenüberliegende Außenseite wird eine etwa gleich große Metallplatte aus Stahl oder Edelstahl als Kathode, welche ebenfalls mit einer Schaumstoffschicht bedeckt ist, gedrückt. Diese Schaumstoffschicht wird mit einer 10 %-igen Natriumhydroxidlösung getränkt. An die Platten wird eine Gleichspannung von 100 V angelegt. Nach 30 Minuten werden die Spannung abgeschaltet, die Elektroden entfernt, der Beton trocken gewischt und es wird die Abdichtungsbehandlung gemäß der in Beispiel 1 beschriebenen Arbeitsweise durchgeführt.

**Patentansprüche**

1. Verfahren zum Abdichten von Beton und Natursteinen gegen Angriffe durch saure Medien, durch Behandeln der Steinoberfläche mit einer wäßrigen Fluorosilicatlösung, dadurch gekennzeichnet, daß die mit der Fluorosilicatlösung getränkte Steinoberfläche mit einer alkalischen Lösung oder Suspension einer Calciumverbindung behandelt wird.

2. Verfahren nach Anspruch 1, dadurch gekennzeichnet, daß eine wäßrige Fluorosilicatlösung eingesetzt wird, die neben mindestens einer Fluorosilicatverbindung von ein- bis dreiwertigen Metallen bzw. des Ammoniums oder des substituierten Ammoniums mindestens ein die Grenzflächenspannung der Lösung herabsetzendes Mittel

enthält.

3. Verfahren nach den Ansprüchen 1 oder 2, dadurch gekennzeichnet, daß man vor oder während der Behandlung mit der Fluorosilicatlösung eine verdünnte Säure auf die Steinoberfläche einwirken läßt.

4. Verfahren nach Anspruch 3, dadurch gekennzeichnet, daß die Behandlung mit einer Fluorosilicatlösung erfolgt, die mit der verwendeten Säure auf einen pH-Wert von ≤ 2 eingestellt worden ist.

5. Verfahren nach den Ansprüchen 3 oder 4, dadurch gekennzeichnet, daß als verdünnte Säure eine wäßrige Lösung von $H_2SO_4$ und/oder $H_3PO_4$ eingesetzt wird, welche gegebenenfalls mindestens ein die Grenzflächenspannung der Lösung herabsetzendes Mittel enthält.

6. Verfahren nach den Ansprüchen 1 bis 3, dadurch gekennzeichnet, daß die Steinoberfläche vor der Behandlung mit der Fluorosilicatlösung mit einer alkalischen Lösung oder Suspension mit einem pH-Wert von ≥ 12 getränkt wird.

7. Verfahren nach Anspruch 6, dadurch gekennzeichnet, daß als alkalische Lösung oder Suspension eine wäßrige Lösung oder Suspension eines Alkalihydroxids oder von Calciumhydroxid eingesetzt wird, welche gegebenenfalls mindestens ein die Grenzflächenspannung der Lösung bzw. der Suspension herabsetzendes Mittel enthält.

8. Verfahren nach den Ansprüchen 6 oder 7, dadurch gekennzeichnet, daß das Einwandern von OH-Ionen bei der Behandlung mit der alkalischen Lösung oder Suspension durch Ionophorese begünstigt wird.

9. Verfahren nach Anspruch 8, dadurch gekennzeichnet, das das Einwandern der OH-Ionen durch Ionophorese unter Anwendung von Elektroden, die über eine mit der alkalischen Lösung oder Suspension getränkte Schaumstoffschicht mit der zu behandelnden Steinoberfläche und ihrer Rückseite in Kontakt stehen, bei einer Gleichspannung im Bereich von 1 bis 1000 V bewirkt wird.

10. Verfahren nach Anspruch 9, dadurch gekennzeichnet, daß bei der Ionophorese eine Kupferanode und eine Kathode aus Stahl oder rostfreiem Stahl eingesetzt werden, wobei die auf der Anode vorliegende Schaumstoffschicht mit Kalkmilch und die auf der Kathode vorliegende Schaumstoffschicht mit einer Alkalihydroxidlösung getränkt sind.

11. Verfahren nach mindestens einem der vorhergehenden Ansprüche, dadurch gekennzeichnet, daß als die Grenzflächenspannung der Lösung herabsetzendes Mittel ein bei Umgebungsbedingungen flüchtiges grenzflächenaktives Mittel eingesetzt wird.

12. Verfahren nach Anspruch 11, dadurch gekennzeichnet, daß als grenzflächenaktives Mittel ein Alkohol mit 1 bis 4 Kohlenstoffatomen und/oder ein Keton mit 1 bis 5 Kohlenstoffatomen eingesetzt wird.

13. Verfahren nach den Ansprüchen 1 bis 12, dadurch gekennzeichnet, daß als Beton Stahlbeton behandelt wird.

**Claims**

1. A method for sealing concrete and natural stone against attacks by acid media, by treating the stone surface with an aqueous fluorosilicate solution, characterized in that the stone surface impregnated with the fluorosilicate solution is treated with an alkaline solution or suspension of a calcium compound.

2. The method according to claim 1, characterized by using an aqueous fluorosilicate solution which, besides at least one fluorosilicate compound of mono- through trivalent metals or of ammonium or substituted ammonium, contains at least one agent to reduce the surface tension of the solution.

3. The method according to claim 1 or 2, characterized in that a diluted acid is made to act on the stone surface before or during the treatment with the fluorosilicate solution.

4. The method according to claim 3, characterized in that the treatment is by means of a fluorosilicate solution which was brought to a pH ≤ 2 by means of the employed acid.

5. The method according to claim 3 or 4, characterized in that an aqueous solution of $H_2SO_4$ and/or $H_3PO_4$ is used as the diluted acid and that where called for, it contains at least one agent to reduce the surface tension of the solution.

6. The method according to claims 1 through 3, characterized in that the stone surface is impregnated with an alkaline solution or suspension with a pH ≥ 12 before the treatment with the fluorosilicate solution.

7. The method according to claim 6, characterized in that the alkaline solution or suspension is in the form of an alkali hydroxide or calcium hydroxide and where called for contains, at least one agent to reduce the surface tension of the solution or suspension.

8. The method according to claims 6 or 7, characterized in that the in-migration of OH ions is enhanced by ionophoresis in the treatment by means of the alkaline solution or suspension.

9. The method according to claim 8, characterized in that the in-migration of the OH ions is implemented by ionophoresis using electrodes which by means of a foam layer impregnated with the alkaline solution or suspension are in contact with the stone surface to be treated and its back side at a DC voltage in the range from 1 to 1,000 volts.

10. The method according to claim 9, characterized in that a copper anode and a steel or stainless steel cathode are employed in the ionophoresis, the foam layer at the anode being impregnated with milk of lime and the foam layer at the cathode being impregnated with an alkali hydroxide solution.

11. The method according to at least one of the preceding claims, characterized in that the agent

to reduce the surface tension is a surfactant volatile at ambient conditions.

12. The method according to claim 11, characterized in that the surfactant is an alcohol having 1 to 4 C atoms and/or a ketone having 1 to 5 C atoms.

13. The method according to claims 1 through 12, characterized in that the concrete treated is reinforced concrete.

**Revendications**

1. Procédé pour rendre étanche le béton et les pierres naturelles contre des attaques par des milieux acides, par traitement de la surface de la pierre avec une solution de fluosilicate aqueuse, caractérisé en ce qu'on traite la surface de la pierre imprégnée d'une solution de fluosilicate avec une solution ou une suspension alcaline d'un composé de calcium.

2. Procédé suivant la revendication 1, caractérisé en ce qu'on utilise une solution de fluosilicate aqueuse qui, outre au moins un composé de fluosilicate de métaux monovalents à trivalents ou d'ammonium ou d'ammonium substitué, comporte au moins un agent qui diminue la superficielle de la solution.

3. Procédé suivant la revendication 1 ou 2, caractérisé en ce qu'on fait agir sur la surface de la pierre un acide dilué avant ou lors du traitement avec la solution de fluosilicate.

4. Procédé suivant la revendication 3, caractérisé en ce qu'on effectue le traitement avec une solution de fluosilicate qui est ajustée à un pH $\leq 2$ à l'aide de l'acide utilisé.

5. Procédé suivant la revendication 3 ou 4, caractérisé en ce qu'on utilise en tant qu'acide dilué une solution aqueuse de $H_2SO_4$ et/ou $H_3PO_4$ qui, le cas échéant, comporte au moins un agent qui diminue la tension superficielle de la solution.

6. Procédé suivant les revendications 1 à 3, caractérisé en ce qu'on imprègne la surface de pierre avec une solution ou avec une suspension alcaline ayant un pH $\geq 12$ avant le traitement avec la solution de fluosilicate.

7. Procédé suivant la revendication 6, caractérisé en ce qu'on utilise en tant que solution ou suspension alcaline une solution ou une suspension aqueuse d'un hydroxyde alcalin ou de l'hydroxyde de calcium, qui, le cas échéant, comporte au moins un agent qui diminue la tension superficielle de la solution ou de la suspension.

8. Procédé suivant la revendication 6 ou 7, caractérisé en ce qu'on favorise la pénétration des ions OH par ionophorèse lors du traitement avec la solution ou la suspension alcaline.

9. Procédé suivant la revendication 8, caractérisé en ce qu'on provoque la pénétration des ions OH par ionophorèse en utilisant des électrodes qui sont en contact avec la surface de la pierre à traiter et sa partie arrière, par l'intermédiaire d'une couche d'un produit moussant imprégné avec la solution ou la suspension alcaline, sous une tension continue dans l'intervalle de 1 à 1000 V.

10. Procédé suivant la revendication 9, caractérisé en ce qu'on utilise lors de la ionophorèse une anode en cuivre et une cathode en acier ou en acier inoxydable, la couche du produit moussant présente sur l'anode étant imprégnée de lait de chaux et la couche de produit moussant présente sur la cathode étant imprégnée d'une solution d'un hydroxyde alcalin.

11. Procédé suivant au moins l'une des revendications précédentes, caractérisé en ce qu'on utilise en tant qu'agent diminuant la tension superficielle de la solution un agent tensio-actif volatil dans les conditions de mise en oeuvre.

12. Procédé suivant la revendication 11, caractérisé en ce qu'on utilise en tant qu'agent tensio-actif un alcool ayant 1 à 4 atomes de carbone et/ou une cétone ayant 1 à 5 atomes de carbone.

13. Procédé suivant les revendications 1 à 12, caractérisé en ce que le béton traité est du béton armé.